(19) **Europäisches Patentamt / European Patent Office / Office européen des brevets**

(11) **EP 3 566 204 B1**

(12) **FASCICULE DE BREVET EUROPEEN**

(45) Date de publication et mention de la délivrance du brevet:
**07.07.2021 Bulletin 2021/27**

(51) Int Cl.:
**G06T 7/00** (2017.01)

(21) Numéro de dépôt: **18700789.3**

(22) Date de dépôt: **04.01.2018**

(86) Numéro de dépôt international:
**PCT/FR2018/050020**

(87) Numéro de publication internationale:
**WO 2018/127665 (12.07.2018 Gazette 2018/28)**

(54) **PROCEDE DE DETERMINATION D'UN INDICE D'HETEROGENEITE DE LA PERFUSION MYOCARDIQUE A PARTIR D'IMAGES MEDICALES**

VERFAHREN ZUM BESTIMMEN EINES HETEROGENITÄTSINDEX DER MYOKARDIALEN PERFUSION AUS MEDIZINISCHEN BILDERN

METHOD FOR DETERMINING A HETEROGENEITY INDEX OF MYOCARDIAL PERFUSION FROM MEDICAL IMAGES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.01.2017 FR 1750066**

(43) Date de publication de la demande:
**13.11.2019 Bulletin 2019/46**

(73) Titulaires:
- **Université Grenoble Alpes**
  **38400 Saint-Martin-d'Hères (FR)**
- **Institut Polytechnique de Grenoble**
  **38000 Grenoble (FR)**
- **Institut National de la Santé et de la Recherche Médicale**
  **75013 Paris (FR)**
- **Centre Hospitalier Universitaire Grenoble Alpes**
  **38700 La Tronche (FR)**

(72) Inventeurs:
- **DESVIGNES, Michel**
  **38700 La Tronche (FR)**
- **POUJOL, Julie**
  **49300 Cholet (FR)**
- **GHEZZI, Catherine**
  **38000 Grenoble (FR)**
- **FAGRET, Daniel**
  **38000 Grenoble (FR)**
- **BARONE-ROCHETTE, Gilles**
  **38700 La Tronche (FR)**

- **RIOU, Laurent**
  **38100 Grenoble (FR)**

(74) Mandataire: **Novagraaf Technologies**
**Bâtiment O2**
**2, rue Sarah Bernhardt**
**CS90017**
**92665 Asnières-sur-Seine Cedex (FR)**

(56) Documents cités:
- **MURTA L O ET AL: "Segmental quantitative analysis of myocardial contrast echocardiography images using a bullseye representation", COMPUTERS IN CARDIOLOGY 2003. THESSALONIKI, GREECE, SEPT. 21 - 24, 2003; [COMPUTERS IN CARDIOLOGY], NEW YORK, NY : IEEE, US, vol. VOL. 30, 21 septembre 2003 (2003-09-21), pages 177-180, XP010698800, ISBN: 978-0-7803-8170-4**
- **Nils P Johnson ET AL: "Clinical Evaluation of a New Concept: Resting Myocardial Perfusion Heterogeneity Quantified by Markovian Analysis of PET Identifies Coronary Microvascular Dysfunction and Early Atherosclerosis in 1,034 Subjects", The Journal of Nuclear Medicine, 1 septembre 2005 (2005-09-01), pages 1427-1437, XP055381706, United States Extrait de l'Internet: URL:http://jnm.snmjournals.org/content/46/9/1427.full.pdf [extrait le 2017-06-14] cité dans la demande**

- POUJOL J ET AL: "Myocardium segmentation on 3D spect images", 2015 IEEE INTERNATIONAL CONFERENCE ON IMAGE PROCESSING (ICIP), IEEE, 27 septembre 2015 (2015-09-27), pages 4788-4792, XP032827338, DOI: 10.1109/ICIP.2015.7351716 cité dans la demande
- Anonymous: "Entropy of grayscale image - MATLAB entropy - MathWorks Benelux", , 7 juillet 2016 (2016-07-07), XP055381594, Extrait de l'Internet: URL:https://web.archive.org/web/2016070709 4554/https://nl.mathworks.com/help/images/ ref/entropy.html [extrait le 2017-06-14]
- H. SONESON ET AL: "An Improved Method for Automatic Segmentation of the Left Ventricle in Myocardial Perfusion SPECT", THE JOURNAL OF NUCLEAR MEDICINE, vol. 50, no. 2, 21 janvier 2009 (2009-01-21), pages 205-213, XP055381654, US ISSN: 0161-5505, DOI: 10.2967/jnumed.108.057323 cité dans la demande
- FILIPPI MARC ET AL: "Joint Segmentation of Myocardium on Rest and Stress Spect Images", 21 octobre 2016 (2016-10-21), NETWORK AND PARALLEL COMPUTING; [LECTURE NOTES IN COMPUTER SCIENCE; LECT.NOTES COMPUTER], SPRINGER INTERNATIONAL PUBLISHING, CHAM, PAGE(S) 71 - 80, XP047360187, ISSN: 0302-9743 ISBN: 978-3-642-38591-9 [extrait le 2016-10-21] page 73 - page 78
- Anonymous: "How to change an image from Cartesian to Polar coordinates in Matlab? - Stack Overflow", , 23 mai 2011 (2011-05-23), XP055381566, Extrait de l'Internet: URL:https://stackoverflow.com/questions/75 80623/how-to-change-an-image-from-cartesia n-to-polar-coordinates-in-matlab [extrait le 2017-06-14]

## Description

**DOMAINE DE L'INVENTION**

La présente invention concerne un procédé de détermination d'un indice d'hétérogénéité de la perfusion myocardique d'un individu à partir d'images médicales de la perfusion myocardique.

**ETAT DE LA TECHNIQUE**

La mortalité mondiale globale est estimée à 56 millions de décès annuels.

Les maladies cardiovasculaires sont la première cause de mortalité à cette échelle, avec 17,5 millions de morts, soit 30% de la mortalité globale.

Le principal pourvoyeur de décès cardiovasculaires est la maladie cardiaque ischémique.

L'hypertension, l'hypercholestérolémie, l'obésité et le diabète sont à leur tour les principaux facteurs de risque favorisant le développement de la maladie cardiaque ischémique.

La prévalence de ces facteurs de risque est telle que la proportion de patients avec au moins l'un d'entre eux atteint fréquemment 80% dans certaines populations.

La sténose des macrovaisseaux coronaires a longtemps été considérée comme la cause principale de la maladie ischémique.

Cependant, le rôle majeur de la dysfonction coronaire microvasculaire (DCM) dans le développement de la maladie cardiaque ischémique a récemment été démontré.

Ainsi, les facteurs de risques cardiovasculaires mentionnés ci-dessus sont responsables d'une DCM précoce et asymptomatique caractérisée par une vasodilatation endothélium-dépendante ou -indépendante altérée responsable d'une vasoconstriction microvasculaire modérée intéressant l'ensemble du myocarde.

Ce dysfonctionnement microvasculaire conduit à une augmentation de l'hétérogénéité de la perfusion myocardique sans ischémie franche avérée.

Cette hétérogénéité de la perfusion myocardique est également observée aux stades avancés de la maladie cardiaque ischémique en parallèle du développement des sténoses macrovasculaires.

L'identification de la DCM comme un acteur majeur de la physiopathologie de la maladie cardiaque ischémique a été permise par le développement récent de techniques invasives pour son évaluation.

Ainsi, les sondes de pression / température intracoronaires permettent la détermination d'un indice de résistance microvasculaire (Index of Microcirculatory Resistance, IMR). L'IMR est calculé grâce à la mesure simultanée, en conditions hyperémiques, de la pression coronaire distale et du temps moyen de transit d'un embol de liquide physiologique grâce à la technique de thermodilution. Des études cliniques ont ainsi démontré la pertinence pronostique de la DCM évaluée par la mesure de l'IMR, en présence d'une maladie coronaire macrovasculaire.

Cependant, la nature invasive de la procédure permettant la détermination de l'IMR limite son utilisation à des populations de patients de taille limitée tandis que la prévalence de la DCM est probablement très élevée.

Une méthodologie non invasive permettant l'évaluation de la DCM en routine clinique serait ainsi d'un intérêt clinique considérable pour l'amélioration de la stratification pronostique des patients et la prévention des conséquences potentiellement fatales de la maladie cardiaque ischémique.

La médecine nucléaire utilise des radiopharmaceutiques pour l'imagerie moléculaire in vivo de processus physiologiques ou physiopathologiques. Après injection intraveineuse, la répartition du radiopharmaceutique dans l'organisme est évaluée grâce à la détection non invasive de la radioactivité par des gamma-caméras et la réalisation d'images scintigraphiques tridimensionnelles. Plus précisément, la cardiologie nucléaire utilise des traceurs radioactifs de la perfusion coronaire pour l'évaluation de la perfusion myocardique au repos et au cours d'un effort ou d'un stress pharmacologique.

Les excellentes valeurs diagnostique et pronostique de l'imagerie nucléaire de la perfusion myocardique ont été confirmées sur d'importantes cohortes de patients.

Cette modalité d'imagerie est notamment utilisée en routine clinique pour l'étude de la perfusion myocardique après injection de traceurs radioactifs de la perfusion..

L'hétérogénéité de la perfusion myocardique, qui reflète la dysfonction endothéliale apparaissant précocement au cours du développement de la maladie coronaire, pourrait donc être évaluée en utilisant les images scintigraphiques de la perfusion myocardique réalisées en routine clinique.

Les travaux de Johnson et Gould ont ainsi montré qu'il était possible de mesurer un indice d'hétérogénéité sur des images de la perfusion myocardique de repos obtenues en TEP 3D [1]. La détermination de cet indice comprend, à partir de ces images, une segmentation du ventricule gauche, un calcul d'une carte d'activité et la mesure d'un indice markovien d'hétérogénéité.

Plus précisément, la perfusion cardiaque est imagée par imagerie TEP après l'injection d'un traceur radioactif marqué avec du Rubidium 82 (82Rb). La reconstruction est effectuée de manière à obtenir une image en trois dimensions du cœur par une superposition de coupes petit axe, c'est-à-dire de coupes perpendiculaires au grand axe du ventricule gauche. Ces coupes couvrent l'ensemble du cœur, de l'apex (ou pointe du cœur) à la base (ou haut du cœur).

Ces images sont utilisées pour la construction d'une carte topographique en deux dimensions de la perfusion myocardique. Ladite carte topographique consiste en une projection cylindrique du cœur à partir du grand axe du ventricule gauche. Cette carte topographique est composée de 21 lignes où chaque ligne est une représentation d'une coupe du ventricule gauche effectuée perpendiculairement au grand axe du ventricule gauche. Chaque ligne contient 64 pixels radiaux qui contiennent l'information de la perfusion du ventricule gauche dans la coupe correspondante. Ces 64 pixels radiaux couvrent ensemble toute la surface du ventricule gauche au niveau d'une coupe.

L'analyse de l'hétérogénéité est ensuite effectuée sur cette carte topographique en deux dimensions après avoir effectué un certain nombre de traitements afin de normaliser la carte. Ainsi, les valeurs des cartes topographiques sont normalisées à 1000 ; les valeurs inférieures à 500 sont remontés à 500 afin d'éliminer les trop faibles niveaux d'activités liés aux tissus cicatriciels : les valeurs au-dessus de 850 sont ramenées à 850 afin d'éliminer les effets des trop hauts niveaux d'activités du myocarde. Ces limites confinent donc l'analyse de l'hétérogénéité de la perfusion à des valeurs d'activité relative comprises entre 50% et 85% de l'activité maximale de chaque carte topographique. Ces valeurs d'intensités réelles comprises entre 500 et 850 inclus sont ensuite ramenées à une plage d'entiers de 35 niveaux d'intensité afin que chaque niveau d'intensité représente 2,9% de la totalité de la plage d'intensité de départ.

Une fois cette normalisation effectuée, un indice d'hétérogénéité H est calculé sur la carte topographique privée de quatre coupes basales, selon la formule suivante :

$$H = \sum_m \frac{1}{(1 + m^2)} \, Pd(m)$$

où Pd(m) est la probabilité de trouver dans l'image deux pixels adjacents ayant des valeurs d'intensité qui diffèrent d'une valeur m.

Ce calcul, appelé analyse de texture markovienne, permet de caractériser la texture d'une image en examinant la probabilité que chaque pixel de l'image ait un pixel voisin avec une différence d'intensité m.

L'indice H possède donc des valeurs comprises entre 0 et 1. Une valeur proche de 0 représente une image qui possède une haute probabilité que les pixels voisins aient des intensités qui diffèrent largement. A l'inverse, une valeur proche de 1 caractérise une image où beaucoup de pixels voisins possèdent la même intensité.

Cet indice d'homogénéité quantifie donc de manière mathématique la notion d'hétérogénéité d'intensité dans une image. Une image de perfusion hétérogène a un indice H faible proche de 0 ; au contraire, une image homogène possède un indice H proche de 1.

L'hypothèse physiopathologique de Johnson et Gould considère a priori la perfusion d'effort ou de stress comme non informative au regard du potentiel pronostique de la mesure de l'hétérogénéité de la perfusion myocardique, et privilégie la perfusion de repos. La faisabilité de la mesure de l'hétérogénéité en modalité SPECT est également mise en doute par les auteurs, qui utilisent la modalité TEP.

Actuellement, aucune méthode ne permet de calculer un indice discriminant à partir de données SPECT 3D cliniques, alors que cette dernière modalité est beaucoup plus couramment utilisée.

Par ailleurs, il est connu de la référence [4] un procédé de détermination d'un indice d'hétérogénéité de la perfusion myocardique d'un individu à partir d'images médicales de la perfusion myocardique comprenant la détermination de l'entropie de ladite carte topographique.

## EXPOSE DE L'INVENTION

Un but de l'invention est de proposer un indice d'hétérogénéité de la perfusion myocardique d'un individu à partir d'images médicales de la perfusion myocardique au repos ou à l'effort qui puisse être déterminé quelle que soit la modalité d'imagerie utilisée, ainsi qu'un procédé de détermination dudit indice.

L'invention propose ainsi un procédé de détermination d'un indice d'hétérogénéité de la perfusion myocardique d'un individu à partir d'images médicales de la perfusion myocardique dudit individu, comprenant la construction, par segmentation bidimensionnelle desdites images, d'une carte topographique formée d'un ensemble de pixels myocardiques définis par une projection cylindrique du myocarde à partir du grand axe du ventricule gauche, et comprenant la détermination de l'entropie de ladite carte topographique. Ladite carte topographique comprend une pluralité de lignes où chaque ligne est une représentation d'une coupe du ventricule gauche effectuée perpendiculairement au grand axe du ventricule gauche, et où chaque ligne comprend une pluralité de pixels radiaux contenant une information de la perfusion du ventricule gauche dans la coupe correspondante. La construction de la carte topographique de projection comprend :

- une estimation du volume du myocarde,
- la segmentation bidimensionnelle du ventricule gauche,
- la détermination du centre du myocarde sur chaque coupe du ventricule gauche,
- l'alignement des centres déterminés pour chaque coupe.

De manière avantageuse, l'entropie de la carte topographique de projection est donnée par la formule suivante :

$$-\sum_{k=0}^{M-1} p_k \log_2(p_k)$$

où M est le nombre de valeurs d'intensité et $p_k$ est la probabilité associée à une intensité de pixel k.

Selon un mode de réalisation, la segmentation du ventricule gauche est réalisée à partir de coupes perpendiculaires au grand axe du ventricule gauche.

Selon une forme d'exécution, la carte topographique et l'entropie sont déterminées pour l'ensemble du myocarde.

Selon une autre forme d'exécution, la carte topographique et l'entropie sont déterminées pour une région du myocarde.

Selon un mode de réalisation, le procédé comprend la détermination d'une entropie globale à partir d'une pluralité d'entropies régionales.

Selon un mode de réalisation, lesdites images médicales sont obtenues par tomographie par émission monophotonique (SPECT).

Selon un autre mode de réalisation, lesdites images médicales sont obtenues par tomographie par émission de positons (TEP).

Selon un mode de réalisation, lesdites images médicales sont obtenues sur un sujet au repos.

Selon un mode de réalisation, lesdites images médicales sont obtenues sur un sujet exerçant un effort.

Selon un mode de réalisation, lesdites images médicales sont obtenues sur un sujet en position de procubitus et/ou de decubitus.

Selon une forme d'exécution, lesdites images médicales sont obtenues dans un mode adapté pour déterminer la variation de l'entropie au cours du temps..

Un autre objet concerne un système de détermination d'un indice d'hétérogénéité de la perfusion myocardique d'un individu à partir d'images médicales de la perfusion myocardique dudit individu, caractérisé en ce qu'il comprend :

- un processeur configuré pour mettre en œuvre le procédé tel que décrit ci-dessus à partir desdites images ;
- un écran couplé au processeur et configuré pour afficher l'entropie déterminée.

De manière avantageuse, ledit système comprend en outre une interface utilisateur adaptée pour être affichée sur l'écran et présentant au moins une des fonctionnalités suivantes :

- charger des images médicales de la perfusion myocardique d'un individu à évaluer,
- lancer une segmentation du ventricule gauche à partir desdites images,
- afficher les images coupe par coupe,
- afficher la carte topographique de projection,
- enregistrer la carte topographique et les paramètres utilisés pour la construction de ladite carte,
- afficher l'entropie de la carte de projection topographique.

L'invention concerne également une station d'acquisition d'images médicales comprenant un système tel que décrit ci-dessus.

L'invention concerne enfin un produit programme d'ordinateur comportant un ensemble d'instructions qui, une fois chargées sur un ordinateur, permettent la mise en œuvre du procédé tel que décrit ci-dessus.

## DESCRIPTION DES FIGURES

D'autres caractéristiques et avantages de l'invention apparaîtront à la lecture de la description détaillée qui va suivre, en référence aux dessins annexés sur lesquels :

- la figure 1 est un logigramme présentant les principales étapes du procédé selon un mode de réalisation de l'invention,
- la figure 2 présente un schéma simplifié du ventricule gauche,
- la figure 3 est une image d'une coupe petit axe obtenue à partir d'une image scintigraphique de la perfusion myocardique,
- la figure 4 illustre un exemple de carte topographique bidimensionnelle de la perfusion myocardique construite lors de la mise en œuvre de l'invention,
- la figure 5 présente d'une part un schéma du principe d'obtention d'une carte topographique bidimensionnelle de la perfusion myocardique à partir de coupes petit axe (A), ainsi qu'un exemple de telles coupes petit axe (B, partie supérieure) et une carte topographique en deux dimensions de la perfusion myocardique utilisée pour la quantification de l'entropie (B, partie inférieure),

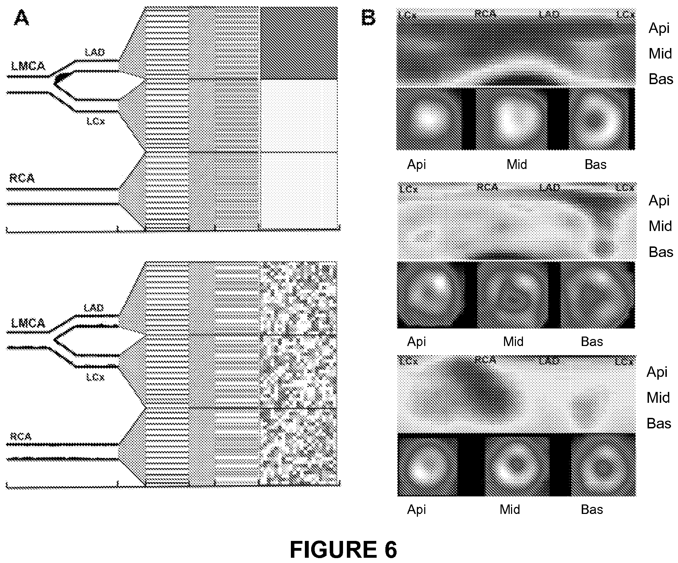

- la figure 6 présente (A) les conséquences d'une athérosclérose localisée (haut) et d'une athérosclérose diffuse (bas) sur la perfusion myocardique, ainsi que (B) des exemples de cartes topographiques bidimensionnelles de projection utilisées pour une analyse de l'entropie et les images de coupe apicale (Api), médiane (Mid) et basale (Bas) en imagerie SPECT, établies respectivement pour un patient présentant une perfusion myocardique et une entropie de perfusion myocardique (MPE) normales, un patient présentant une ischémie myocardique et une MPE augmentée, et un patient présentant une perfusion myocardique normale et une MPE augmentée,
- la figure 7 présente le nombre d'événements cumulés en fonction de la durée de la période de suivi selon le niveau d'entropie au stress d'une population de patients présentant une scintigraphie myocardique normale,
- la figure 8 présente le pourcentage d'accidents cardiaques majeurs selon le niveau d'entropie, pour une population de patients diabétiques,
- la figure 9 présente la courbe de survie sans accident cardiaque majeur desdits patients diabétiques, selon leur niveau d'entropie.

## DESCRIPTION DETAILLEE DE L'INVENTION

Physiologie cardiaque

La perfusion décrit le processus physiologique qui permet d'alimenter un organe en composés chimiques. La présente invention s'intéresse à la perfusion sanguine du myocarde. Pour que le muscle cardiaque fonctionne dans des conditions satisfaisantes, il est raisonnable d'admettre que sa perfusion doit être optimale et puisse s'adapter à l'effort par l'augmentation de son débit.

La perfusion sanguine d'un organe est intimement liée à l'anatomie des vaisseaux sanguins qui irriguent cet organe.

Les vaisseaux sanguins sont des conduits qui transportent le sang dans l'organisme.

En coupe transversale, les vaisseaux possèdent de l'extérieur vers l'intérieur :

- l'adventice, qui est la couche externe des vaisseaux. Elle est composée de tissus conjonctifs et de fibres élastiques. Cette couche possède essentiellement une fonction de soutien aux vaisseaux en empêchant leur déformation.
- la media, qui est la couche intermédiaire des vaisseaux sanguins. Elle est composée de collagène et d'élastine. Dans les artères de petit et moyen calibre, elle contient les fibres musculaires lisses permettant la vasoconstriction.
- l'intima, qui est la couche interne de la paroi artérielle. Elle est formée par l'endothélium vasculaire reposant sur une couche de tissu conjonctif.

L'endothélium joue un rôle essentiel dans l'homéostasie vasculaire en sécrétant des substances qui permettent de réguler le tonus vasculaire, l'activité des plaquettes, les facteurs de coagulation etc. En régulant le tonus vasculaire, l'endothélium module ainsi la perfusion des organes et des muscles en adaptant le diamètre des vaisseaux aux besoins de l'organisme.

Les dysfonctions endothéliales peuvent impliquer une ou plusieurs des fonctions dont l'endothélium a la charge. Les possibilités d'altération de ces fonctions sont nombreuses, la dysfonction endothéliale a été définie en pratique comme étant une diminution de la réponse vasodilatatrice des vaisseaux sanguins. L'homéostasie vasculaire étant assurée par une balance entre des facteurs vasodilatateurs et des facteurs vasoconstricteurs, lorsque celle-ci est rompue, le système vasculaire présente une prédisposition à la vasoconstriction, l'activation des plaquettes, la coagulation, la thrombose, l'inflammation et surtout l'athérosclérose.

La dysfonction endothéliale est donc à l'origine d'une vasoconstriction paradoxale qui entraine l'apparition d'une hétérogénéité dans la perfusion du myocarde.

Par ailleurs, la dysfonction endothéliale est responsable de l'apparition d'une réaction inflammatoire qui accélère le développement de la plaque.

La dysfonction endothéliale est donc un phénomène précoce qui peut être étudié pour identifier le risque d'athérosclérose bien avant le développement de la plaque.

La mise en œuvre, grâce à l'invention, d'une technique d'analyse non invasive pour caractériser cette dysfonction est d'un grand intérêt en routine clinique afin de prévoir le développement de ces plaques responsables d'une insuffisance coronaire.

Ainsi, l'analyse de la dysfonction endothéliale est appréhendée de façon indirecte en observant l'hétérogénéité de la perfusion des organes. En effet, l'endothélium modulant la perfusion des organes, une dysfonction endothéliale a pour conséquence de faire apparaître une majoration de l'hétérogénéité de la perfusion au sein de l'organe irrigué par des vaisseaux sanguins altérés.

Depuis 1970, la scintigraphie de la perfusion du myocarde est utilisée en routine clinique. Les médecins nucléaires analysent des images de perfusion myocardique de repos et d'effort afin de détecter la présence d'ischémies myocardiques, c'est à dire de territoires myocardiques sous-perfusés.

Bien que la description qui suit vise des images scintigraphiques, il est à noter que l'invention s'applique également à toute autre modalité d'imagerie de la perfusion myocardique, telle que l'IRM ou la tomodensitométrie, par exemple.

A un stade précoce de la maladie coronaire, la dysfonction endothéliale des artères coronaires induit de faibles défauts de perfusion répartis sur l'ensemble du myocarde. Ces faibles défauts sont difficilement visibles à l'œil nu et, lorsqu'ils sont visibles, restent difficilement interprétables tels quels par les cardiologues.

Imagerie scintigraphique du myocarde

L'imagerie scintigraphique du myocarde est basée sur l'injection intraveineuse d'un traceur isotope radioactif, associé ou non à une molécule vectrice, qui va se fixer sur les tissus musculaires proportionnellement au débit sanguin local. On observe alors avec une gamma caméra la fixation du produit sur le myocarde et plus particulièrement sur le ventricule gauche. L'observation d'un défect de fixation sur l'une des parois est le signe d'une ischémie.

Un test de stimulation est réalisé avant l'injection du traceur. Il s'agit en général d'une épreuve d'effort, ou, à défaut, de l'injection d'un médicament qui simule l'épreuve d'effort. Si cette première partie est normale, la deuxième partie, c'est-à-dire l'examen au repos, n'est parfois pas réalisée.

Deux modalités d'imagerie sont disponibles pour la réalisation d'images scintigraphiques. La tomographie par émission de positons (imagerie TEP) permet l'acquisition d'images en exploitant le rayonnement émis par des traceurs radioactifs marqués avec un émetteur de positons, tandis que la tomographie par émission monophotonique (imagerie SPECT) permet l'imagerie du rayonnement émis par des émetteurs de photons uniques.

L'imagerie TEP consiste en l'injection d'un traceur radioactif instable dont le noyau va se désintégrer en émettant un positron. Ce positron va parcourir une faible distance dans le corps humain avant de s'annihiler avec les électrons du milieu. Cette annihilation s'accompagne de l'émission de deux rayons γ de 511 keV diamétralement opposés. L'origine d'émission des photons est localisée grâce à leur détection simultanée par des gamma-caméras tournant autour du patient.

La tomographie d'émission monophotonique, (TEMP) dite aussi SPECT (acronyme du terme anglosaxon « Single photon emission computed tomography ») est une technique d'imagerie médicale nucléaire tomographique également basée sur la scintigraphie. Dans cette technique, c'est un isotope radioactif émetteur d'un photon γ qui est produit lors de la désintégration. Ces photons γ sont sélectionnés par un collimateur (sélection angulaire des photons) et détectés par des gammas-caméras tournant autour du patient.

En raison de l'absence de collimation physique, l'imagerie TEP est plus sensible que l'imagerie SPECT. La résolution des deux modalités d'imagerie est similaire. Dans les deux cas, la tomographie permet de reconstruire un volume tridimensionnel (3D) du myocarde, cette image étant davantage une représentation physiologique qu'une représentation anatomique du cœur.

Contrairement aux travaux de Johnson et Gould qui se sont focalisés sur des images TEP, les inventeurs ont montré qu'il était possible d'obtenir un indice d'hétérogénéité fiable avec des images SPECT grâce au procédé selon l'invention.

On précise que l'acquisition des images n'est pas incluse en tant que telle dans le procédé de l'invention, qui utilise des images préalablement acquises - qu'il s'agisse de la modalité TEP ou de la modalité SPECT, d'un examen au repos ou d'un examen d'effort.

Par ailleurs, les images utilisées peuvent être synchronisées ou non à un électrocardiogramme (ECG). La synchronisation à l'ECG présente un intérêt potentiel en ce qu'elle permet l'obtention d'images (par exemple au nombre de huit) dont chacune est formée à partir d'événements survenus dans l'un des huit intervalles dans lesquels le cycle cardiaque est découpé grâce à l'ECG. Malgré une diminution du nombre de coups par images (d'un facteur 8 si huit images sont réalisées), la synchronisation peut permettre d'améliorer la qualité de la quantification de l'entropie en minimisant le flou résultant du mouvement cardiaque au cours du cycle sur l'image non synchronisée.

Lors de l'acquisition des images, l'individu peut être en position de décubitus et/ou de procubitus. Certains cas d'atténuation artefactuelle de l'activité myocardique surviennent dans une position donnée et pas dans une autre. Le fait de disposer d'images dans les deux positions permet de classer comme artefactuelle une hypofixation myocardique qui aurait autrement pu être interprétée comme un trouble perfusionnel réel.

Selon un mode de réalisation, les images sont acquises selon un mode dit « list ». Dans ce mode, toutes les informations relatives à chaque événement de désintégration radioactive utilisé pour la formation de l'image sont enregistrées (position en x, y, et z, énergie, instant d'interaction avec le détecteur de la caméra). Ce mode n'est pas utilisé en routine afin de minimiser la taille des fichiers générés par une acquisition. Cependant, ce mode permet de déterminer la variation temporelle de l'entropie en fonction des cinétiques myocardiques connues de captation et de lavage du radiopharmaceutique utilisé. En particulier, ce mode peut permettre de reconstruire des images à différents temps après l'injection du traceur, et une analyse statistique peut alors déterminer le temps auquel se placer le plus pertinent au regard de l'apport pronostique.

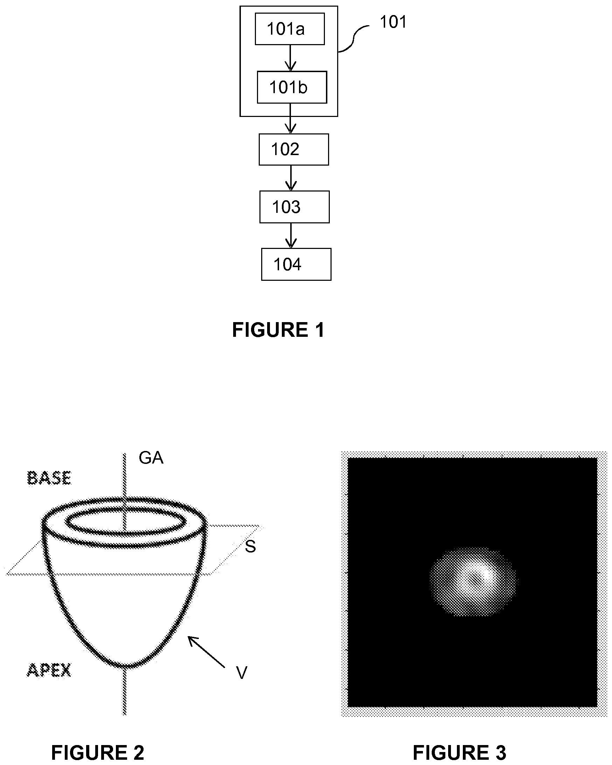

On va maintenant décrire les principales étapes du procédé, qui sont mises en œuvre à partir d'images scintigraphiques, en référence au logigramme de la figure 1.

Ce procédé est mis en œuvre par ordinateur. Notamment, les moyens de mise en œuvre de l'invention comprennent :

- un écran configuré pour afficher une interface utilisateur, ladite interface permettant notamment de charger une ou des images scintigraphiques de la perfusion myocardique préalablement acquises par imagerie TEP ou SPECT (d'autres fonctionnalités de ladite interface seront décrites plus bas) ;
- un processeur couplé à l'écran et configuré pour implémenter un algorithme de segmentation du ventricule gauche à partir desdites images, de construction d'une carte topographique de projection et de détermination de l'entropie de ladite carte, et pour afficher ladite entropie sur l'écran.

Un tel système peut être notamment intégré à une station d'acquisition d'images médicales de la perfusion myocardique.

Segmentation du ventricule gauche (étape 101)

Les images TEP ou SPECT de la perfusion myocardique montrent principalement une image nette du ventricule gauche et une image plus ténue du reste du myocarde. En effet, la paroi myocardique entourant le ventricule gauche est plus épaisse et fixe beaucoup plus les traceurs radioactifs que la paroi myocardique du ventricule droit.

La segmentation du ventricule gauche et la détermination du centre de la cavité du ventricule gauche sont effectuées pour construire la carte topographique. L'homme du métier dispose de différentes méthodes à cet effet.

Selon un mode de réalisation, on effectue une segmentation 3D à partir du volume de l'image TEP ou SPECT. Ce mode de réalisation est décrit plus bas dans le paragraphe « Segmentation et carte topographique tridimensionnelles ».

Selon un autre mode de réalisation, qui est celui décrit ci-après, on effectue une segmentation 2D à partir de chaque coupe petit axe de l'image scintigraphique.

Par ailleurs, il est également possible, après segmentation 2D ou 3D, de choisir une région du ventricule gauche dans laquelle un indice local d'hétérogénéité sera mesuré. Cette solution permet de déterminer l'hétérogénéité de la perfusion dans des régions myocardiques sous-tendues par une artère coronaire spécifique.

La figure 2 présente un schéma simplifié du ventricule gauche V. Le grand axe est désigné par GA. Une coupe petit axe S, perpendiculaire au grand axe, est également représentée. La figure 3 est une image d'une coupe petit axe obtenue à partir d'une image scintigraphique de la perfusion myocardique.

Pour mettre en œuvre ladite segmentation, on peut en particulier appliquer l'enseignement de Soneson et al. [2], qui présentent une méthode de détermination automatique du centre de la cavité du ventricule gauche. Cette méthode est basée sur l'hypothèse que les coupes petit axe du ventricule gauche sont circulaires. Le centre du ventricule gauche est obtenu en faisant la moyenne pondérée de la position des pixels d'intensité la plus intense sur différents rayons partant d'un premier centre approximatif. Le centre est donc calculé sur chaque coupe petit axe en appliquant un algorithme d'optimisation.

Le point de départ pour l'algorithme d'optimisation est le pixel central de l'image. A partir de ce point central, quarante droites sont tracées dans quarante directions radiales de manière à couvrir de manière régulière 360°.

Sur chacune des quarante directions, un profil d'intensité est déterminé et le point d'intensité maximale est identifié. Ce point d'intensité maximale correspond théoriquement à un point situé au milieu de la paroi myocardique du ventricule gauche. A partir de ces quarante points d'intensité maximale, 20 milieux sont déterminés en faisant la moyenne des positions entre le point d'intensité maximale d'une droite et celui de la droite diamétralement opposé.

Ensuite, la moyenne en position de ces 20 milieux est calculée afin de déterminer un nouveau centre pour la cavité du ventricule gauche. Le calcul se termine lorsque le mouvement du centre est inférieur à 0,5 mm ou lorsque le nombre d'itérations excède 10.

Cette étape de segmentation permet de se placer dans les mêmes conditions d'analyse des images pour les différents états (au repos et à l'effort) et pour les différents individus. Pour cela il faut d'abord déterminer le volume d'intérêt sur lequel l'analyse sera effectuée et ensuite placer le centre au sein de la cavité du ventricule gauche.

*Etape 101a - Détermination du volume myocardique d'intérêt*

Les images scintigraphiques de la perfusion myocardique étant de nature fonctionnelle, aucun repère anatomique n'est disponible pour reproduire d'un individu à l'autre le même volume d'intérêt.

Sur l'ensemble des coupes petit axe du cœur, la coupe la plus probable est celle qui possède le plus d'informations. C'est donc la coupe qui possède la plus grande surface de cœur, c'est-à-dire la coupe qui a le plus grand nombre de pixels d'intensité non nulle. Cette coupe est la coupe de départ pour l'algorithme de segmentation.

Ensuite, les coupes situées entre la coupe de départ et la coupe la plus basale ne sont conservées que si elles possèdent au moins un pixel d'intensité supérieure à 73% de l'intensité maximale de l'ensemble des pixels sur toutes les coupes. Enfin, les coupes situées entre la coupe de départ et la coupe la plus apicale ne sont conservées que si elles possèdent au moins un pixel d'intensité supérieure à 65% de cette intensité maximale.

De manière optionnelle, une fois la zone d'intérêt déterminée, les coupes restantes peuvent être interpolées afin d'obtenir 21 coupes et avoir ainsi le même nombre de coupes pour chaque individu.

*Etape 101b - Détermination du centre du ventricule gauche*

La détermination de centre du ventricule gauche avec précision est une étape importante du procédé car la position des centres influe fortement sur l'allure des cartes topographiques et donc sur l'indice calculé à partir de ces cartes.

La détermination du centre du ventricule gauche sur chaque coupe est faite en quatre étapes successives qui, associées, permettent d'obtenir un résultat visuel satisfaisant dans la majorité des cas.

Dans une première étape, une position approximative du centre du ventricule gauche est déterminée.

Les inventeurs ont développé un algorithme sur un échantillon de 36 patients diabétiques et 22 individus sains. Bien que les coupes du cœur soient différentes d'un individu à l'autre, dans la majorité des cas le ventricule gauche est bien visible alors que le ventricule droit et certains autres organes du corps n'apparaissent que plus faiblement.

Pour une première approximation de la position du centre du ventricule gauche sur chaque coupe, les limites du cœur à gauche, à droite, en haut et en bas sont déterminées. Le cœur étant délimité ainsi par un rectangle, il suffit de prendre l'intersection des diagonales (centre du rectangle) afin de trouver la position du centre du ventricule gauche.

Cette première méthode donne une première approximation de la position du cœur mais celle-ci doit généralement être corrigée. En effet, elle donne de bons résultats dans le cas où les coupes ne possèdent pas ou peu de bruit provenant du ventricule droit ou d'autres organes que le ventricule gauche. Cependant dans le cas où l'on voit apparaître du bruit dû à la fixation du traceur au niveau des autres organes et du ventricule droit, le cœur est moins facilement assimilable à un cylindre, et l'erreur sur la position du centre du ventricule gauche est plus importante et nettement visible par simple observation de la coupe.

Dans une deuxième étape, la position du centre est ajustée avec davantage de précision.

Une étape de seuillage des coupes est effectuée afin de ne récupérer que le ventricule gauche (ou une partie de celui-ci). Chaque coupe est traitée avec un seuil égal à 50% de la valeur maximale de l'ensemble des pixels sur toutes les coupes. Le ventricule gauche captant beaucoup plus de traceur que le ventricule droit ou les autres organes à proximité du cœur, ce seuil à 50% permet d'éliminer les bruits dus aux ventricules droits et autres organes et aussi de faire apparaître la cavité du ventricule gauche où le traceur y est absent. Ensuite, à partir de cette image seuillée, le centre du ventricule gauche peut être déterminé sur chaque coupe.

Au cours de cette étape, seuls les pixels du ventricule gauche sont récupérés. Dans la majorité des coupes il y a présence de bruit dû à la fixation du traceur dans le ventricule droit ou alors dans d'autres organes proches du cœur. La paroi du myocarde entourant le ventricule gauche est épaisse et très irriguée. Le traceur se fixe donc essentiellement au niveau de la paroi du myocarde du ventricule gauche qui apparaît sur l'image avec une forte intensité.

Sur chacune des coupes du cœur, seuls les pixels possédant une intensité supérieure à 50% de l'intensité maximale de l'ensemble des pixels dans toutes les coupes sont conservés. L'image obtenue est une image binaire avec les pixels de valeurs initiales supérieures à 50% de la valeur maximale du myocarde égaux à un - en blanc - et le reste des pixels de la coupe égaux à zéro - en noir.

Cette image binaire ne contient pas que les pixels du ventricule gauche. En effet, il se peut que le ventricule droit ou les autres organes proches du cœur fixent suffisamment le traceur pour que les pixels correspondant à cette zone soient conservés lors du seuillage de l'image.

En outre dans le cas où il y a plusieurs composantes connexes dans l'image, seule celle de plus grande taille est conservée.

L'image binaire ainsi obtenue fait apparaître la paroi musculaire du ventricule gauche en blanc et sa cavité en noir.

A partir de cette image binaire, un masque de segmentation est créé en effectuant une fermeture avec un disque de taille 6 pixels comme un élément structurant. La taille de l'élément structurant a été choisie après plusieurs tests avec des disques de différentes tailles. Un disque de 6 pixels de diamètre est le plus adapté dans la majorité des cas.

Finalement, l'image de départ de la coupe en niveaux de gris est multipliée par le masque de segmentation afin de récupérer les pixels de la paroi et de la cavité du ventricule gauche.

Cette méthode est applicable pour les coupes située dans la partie centrale et basale du cœur où se situe la cavité du ventricule gauche. En effet on observe une diminution de l'intensité des niveaux de gris des pixels au centre de l'image c'est-à-dire à l'intérieur de la cavité du ventricule gauche où le traceur ne se fixe pas. On a donc besoin d'effectuer une fermeture de l'image seuillée pour obtenir le masque de segmentation.

Dans le cas des coupes apicales, la cavité du ventricule gauche est absente : les coupes sont donc uniformément lumineuses.

On obtient donc directement une image binaire correspondant au masque de segmentation. L'image de départ ainsi segmentée contient seulement les pixels les plus intenses qui correspondent au muscle myocardique :

Les coupes au niveau du centre et de la base du cœur possèdent une cavité ventriculaire gauche qui apparaît nettement lorsque l'on segmente l'image. Dans ces cas, on utilise avantageusement la méthode de Soneson et al [2].

Les coupes apicales ne possèdent pas de cavité mais seulement du muscle myocardique. Pour ces coupes-ci, les pixels de contour sont récupérés et modélisés par un cercle dont le centre sera le nouveau centre du ventricule gauche.

Comme pour les coupes médianes et basales, cette deuxième méthode permet d'améliorer la position des centres pour les coupes apicales.

Dans une troisième étape, on identifie le pixel de moindre activité de la cavité.

Cette avant-dernière étape de détermination des centres concerne les coupes qui présentent une cavité c'est-à-dire les coupes médianes et basales.

Au cours de cette étape, les pixels de la cavité sont identifiés. Ils sont intuitivement identifiés comme un ensemble de pixels adjacents de faible intensité et formant une sorte de disque entouré par une couronne de pixels de plus forte intensité correspondants aux pixels de la paroi du myocarde.

Une fois la cavité identifiée, le nouveau centre est placé au milieu du pixel de moindre intensité de la cavité.

Pour identifier les pixels de la cavité, l'image de départ est seuillée avec un seuil à 50% de la valeur maximale du myocarde comme lors de la troisième étape. Sur certaine coupe, la cavité apparait automatiquement bien entourée d'une couronne de pixels blancs. Cela concerne essentiellement les coupes situées dans la partie médiane du myocarde où l'activité du ventricule gauche est importante. Le pixel de moindre intensité est identifié et utilisé pour le placement du centre de la cavité.

Cependant dans les coupes situées au niveau basal, la cavité n'apparaît pas nettement il faut donc la reconstruire.

Pour reconstruire la cavité, le rayon et le centre du ventricule gauche que renvoie le code de la deuxième étape sont utilisés (pour obtenir le rayon on détermine des pixels du bord du ventricule seuillé et l'on prend la plus grande distance au centre). La cavité apparaît alors nettement sur l'image reconstruite suivante. Le pixel de moindre intensité est identifié comme nouveau centre du ventricule gauche.

Dans une quatrième étape, on réaligne les centres.

Cette quatrième étape permet de régulariser la position des centres sur l'ensemble des coupes. En effet, l'objet traité est un objet discret en trois dimensions. En traitant les coupes du cœur une par une afin de trouver le centre de la cavité du ventricule, l'information de troisième dimension le long du grand axe est perdue.

En faisant l'hypothèse que la cavité du ventricule gauche peut être aussi modélisée par un cylindre dont le rayon diminue lorsque l'on progresse de la base vers l'apex, on peut aussi supposer que le grand axe du ventricule gauche peut être modélisé par une droite.

Les centres du ventricule gauche sur chaque coupe sont réalignés sur une droite avec la méthode des moindres carrés. Cette droite passe par les centres de départ dont les positions sont les plus probables, c'est-à-dire les points des coupes possédant une cavité.

Cette quatrième étape réintroduit l'information de la troisième dimension et permet de corriger les biais de position des centres qui auraient pu apparaître pour certaines coupes.

Création de la carte topographique bidimensionnelle (2D) (étape 102)

La carte de projection est une représentation en deux dimensions du cœur obtenue à partir d'une pluralité de coupes petit axe du cœur (ici au nombre de 21).

Chaque coupe petit axe du cœur correspond à une ligne sur la carte topographique de projection.

Sur chaque coupe, une pluralité de droites de projection sont tracées à partir du centre du ventricule gauche de manière à balayer les 360° de manière régulière. Le nombre n (qui est un entier) de projections peut être égal à 64. Cependant, les 64 droites de projection fournissent une information redondante. De manière alternative, ce nombre n peut être inférieur à 64, si l'on ne considère que les droites de projection pour lesquelles le changement d'angle permet d'accéder à un pixel décrivant effectivement une zone distincte du ventricule gauche.

Les droites de projection sont composées d'un nombre fixe de pixels radiaux espacés d'une distance qui varie selon chaque coupe.

Pour obtenir ces droites de projection, on utilise un algorithme permettant de transformer une image cartésienne en une image polaire. L'ensemble des points de cette image polaire sont les pixels radiaux.

La création de l'image polaire à partir de l'image cartésienne nécessite la position d'un pixel central, de n angles à prendre entre 0° et 360° et d'un nombre de points d'interpolation sur chacune des n droites d'interpolations. Enfin pour ne pas perdre d'information lors du passage de l'image cartésienne à l'image polaire, chaque droite de projection comprend au moins un pixel radial dans un pixel cartésien.

La distance entre deux pixels radiaux sur un même rayon est donc calculée afin d'obtenir un pixel radial par pixel cartésien du ventricule gauche. Tout d'abord les limites à gauche, à droite, en haut et en bas du ventricule gauche sont déterminées. Ensuite la distance maximale entre le centre et ces différentes limites est calculée. Cette distance permet d'obtenir un rayon d'interpolation qui couvre la totalité de la surface du ventricule gauche.

Pour une interpolation sous MATLAB™, l'interpolation linéaire donne de meilleurs résultats que l'interpolation au plus proche voisin et présente en outre l'avantage d'être plus simple à mettre en œuvre et de nécessiter moins de temps de calcul.

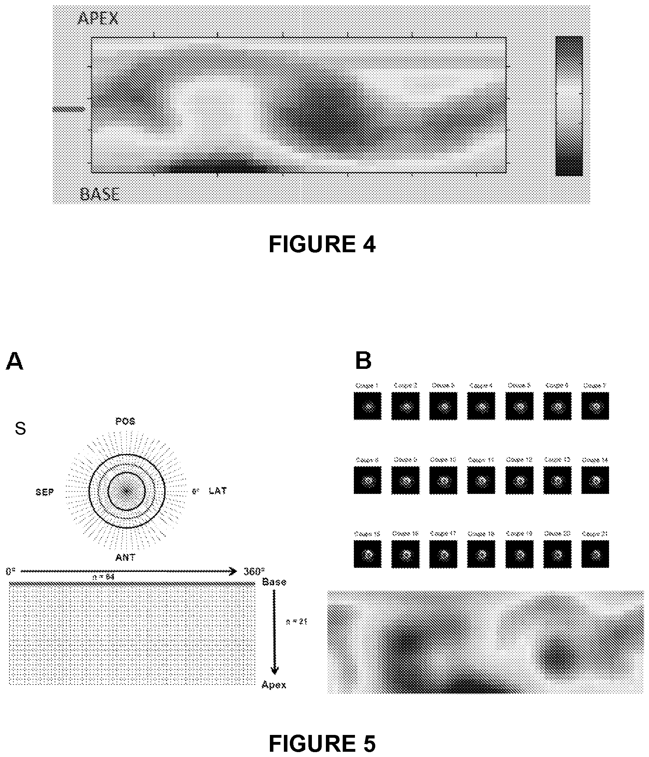

La figure 4 est un exemple d'une carte topographique de projection ainsi construite.

Segmentation et carte topographique tridimensionnelles (3D)

Dans le cas d'une segmentation 3D, ce qui constitue un mode de réalisation alternatif non-couvert par les revendications, l'ensemble du volume obtenu lors de l'acquisition des images scintigraphiques peut être utilisé pour générer des coupes dans n'importe quel axe du ventricule gauche. Ces coupes peuvent par la suite être utilisées pour la segmentation 3D.

Les éléments sélectionnés dans chacune des coupes petit axe comme appartenant au myocarde selon la méthode décrite en 101 ci-dessus peuvent être utilisés pour reconstituer un ensemble de voxels figurant le volume segmenté. Ces voxels sont utilisés pour ajuster leur position 3D avec un modèle analytique du myocarde. L'équation correspondant à ce modèle analytique est utilisée pour calculer la normale à chaque voxel. L'intensité maximale est ensuite recherchée le long de la normale à chaque point de l'objet segmenté. Des itérations de l'opération sont réalisées avec l'ajustement des données au modèle analytique, le calcul des normales et la recherche des maxima. Ces étapes aboutissent à la génération d'un objet 3D correspondant à une carte topographique 3D non visualisable. L'épaisseur du myocarde peut être prise en compte en appliquant un modèle gaussien le long de chaque normale et en choisissant la valeur du seuil au-delà de laquelle les pixels seront conservés pour la mesure de l'entropie, ceci afin de prendre en compte l'activité transmurale en traceur plutôt que la valeur unique d'activité maximale.

Normalisation de la carte topographique (étape 103)

Les étapes de normalisation, qui sont similaires à celles décrites dans [1], sont les suivantes :

- Division par la valeur maximale de la carte topographique
- Multiplication par 1000
- Les valeurs inférieures à 500 sont remontées à 500
- Les valeurs supérieures à 850 sont descendues à 850
- La plage de réels de 500 à 850 est rééchelonnée en plage d'entiers de 1 à 35

Cette étape de normalisation supprime l'information d'hétérogénéité contenue dans les zones où les valeurs des pixels sont supérieures à 85% de la valeur maximale ou inférieures à 50% de la valeur maximale. L'hétérogénéité de la perfusion dans ces zones n'est donc pas prise en compte dans l'analyse.

Le calcul de l'indice d'hétérogénéité est ensuite effectué sur la carte topographique ainsi normalisée.

Calcul de l'indice d'hétérogénéité (étape 104)

Les inventeurs ont découvert que l'entropie de la perfusion myocardique (MPE, acronyme du terme anglo-saxon « Myocardial Perfusion Entropy ») est un critère très pertinent pour évaluer l'hétérogénéité de la perfusion myocardique.

L'entropie de la carte topographique est définie par la formule suivante :

$$-\sum_{k=0}^{M-1} p_k \log_2(p_k)$$

où M est le nombre de valeurs d'intensité et $p_k$ est la probabilité associée à une intensité de pixel k.

L'entropie quantifie l'information contenue dans une image et peut être ainsi considérée comme une mesure du désordre de l'image. L'entropie est également la limite inférieure du nombre moyen de bits par pixel nécessaire pour encoder l'image sans distorsion. L'entropie est donc maximale pour une distribution uniforme, et nulle pour une image constante.

Comme indiqué plus haut, l'entropie ainsi déterminée peut être globale, si la segmentation et la construction de la carte topographique ont été effectuées sur l'ensemble du ventricule gauche. De manière alternative, l'entropie peut être régionale, si la segmentation et la construction de la carte topographique ont été effectuées sur une région seulement du ventricule gauche. Eventuellement, une entropie globale peut être déterminée à partir des entropies régionales qui ont pu être obtenues à partir d'images de meilleure qualité. Notamment, comme mentionné plus haut, la réalisation systématique d'images de procubitus puis décubitus permet de s'affranchir des artéfacts. En effet, la meilleure des deux images - sans ou avec le moins d'artéfact - sera utilisée pour la quantification de l'entropie (globale ou régionale).

En plus de permettre la détermination de l'hétérogénéité de perfusion dans des territoires myocardiques sous-tendus par une artère coronaire spécifique, la détermination d'entropies régionales permet d'analyser les variations apico-basales de l'entropie et ainsi d'affiner l'évaluation de l'état de l'individu.

La figure 5 illustre schématiquement le procédé qui vient d'être décrit. La partie A présente le principe d'obtention d'une carte topographique 2D de la perfusion myocardique à partir de coupes petit axe. La partie B présente un exemple de telles coupes petit axe (partie supérieure) et une carte topographique en deux dimensions de la perfusion myocardique utilisée pour la quantification de l'entropie (partie inférieure).

La figure 6 présente (A) les conséquences d'une athérosclérose localisée (haut) et d'une athérosclérose diffuse (bas) sur la perfusion myocardique, ainsi que (B) des exemples de cartes topographiques 2D de projection utilisées pour une analyse de l'entropie et les images de coupe apicale (Api), médiane (Mid) et basale (Bas) en imagerie SPECT, établies respectivement pour un patient présentant une perfusion myocardique et une entropie de perfusion myocardique (MPE) normales, un patient présentant une ischémie myocardique et une MPE augmentée, et un patient présentant une perfusion myocardique normale et une MPE augmentée.

Cette figure illustre l'hypothèse que des dysfonctionnements microcirculatoires peuvent être mis en évidence par la quantification de l'entropie de perfusion.

Validations expérimentales

La méthode qui vient d'être décrite sur la base d'une segmentation et d'une carte topographique bidimensionnelles pour déterminer l'entropie de la perfusion myocardique a fait l'objet d'une expérimentation démontrant la validité de l'entropie pour le pronostic d'un incident cardio-vasculaire, à partir d'images scintigraphiques.

Sur les 443 patients étudiés, 246 (55%) était des hommes, avec une moyenne d'âge à 63 ans. Les indications de tomoscingraphie myocardique étaient répartis de la manière suivante : 6% avec des douleurs thoraciques typiques, 32% avec des douleurs thoraciques atypiques et 62% pour la recherche d'ischémie myocardique silencieuse (composite : regroupant les bilans pré-chirurgicaux, les recherche de re-sténose, les asymptomatiques). 48% des patients étaient diabétiques, 61% hypertendus, 49% dyslipidémiques et 32% tabagiques. Un peu plus de la moitié des patients (56%) ont bénéficié d'un stress pharmacologique par dipyridamole, 37% d'une épreuve d'effort, 6% par dobutamine et 1% de stress mixte (effort-dipyridamole).

Durant le suivi, 73 événements cardiovasculaires sont survenus, incluant 13 décès cardio-vasculaires, 5 IDM, 9 AVC, 17 revascularisations, et 29 coronarographies.

Les événements ont été évalués après un suivi médian de 1212 ± 151 jours (3.3 ± 0.4 ans) et le suivi était complété à plus de 95%. Le taux d'événement annuel était de 4.8%/ans.

Les facteurs prédictifs en analyse univariée comprenaient : l'âge, l'hypertension, l'hérédité coronarienne, le score SSS et l'entropie au stress. L'analyse multivariée ne retenait que l'âge (1.04 [1.01 ; 1.06] p <0.0001) et l'entropie au stress (1.6 [1.004; 2.56] p= 0.04) comme facteurs pronostiques indépendants d'événements cardio-vasculaires.

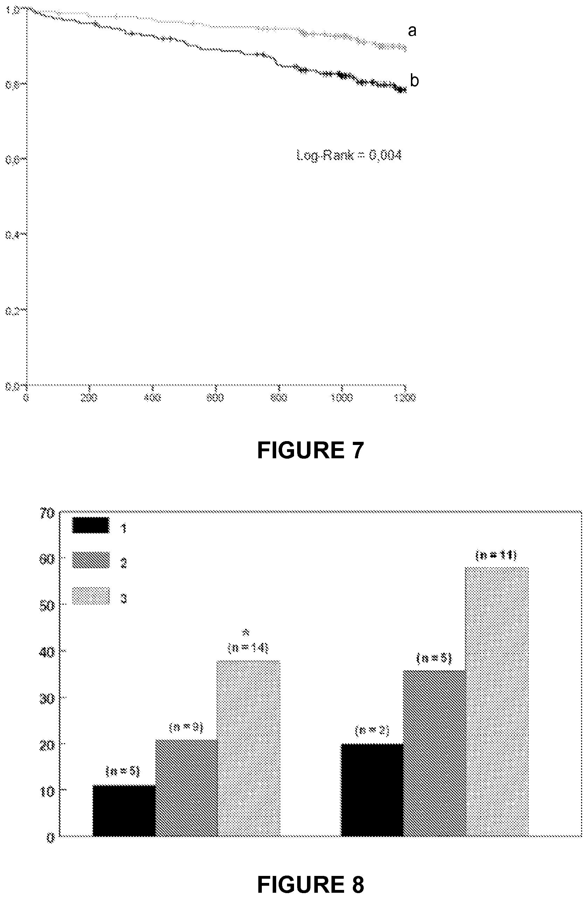

Le modèle statistique de Kaplan-Maier a été utilisé pour réaliser les courbes de survie. Comme on le voit sur la figure 7, qui présente le nombre d'événements cumulés en fonction de la durée de la période de suivi (en jours), les courbes de survie diffèrent de manière significative selon le niveau d"entropie au stress (courbe a : MPE> 4,06 ; courbe b : MPE < 4,06). La survie sans événement est significativement abaissée chez les patients ayant une entropie plus élevée (> 4.06) donc une perfusion plus hétérogène (log-rank p = 0.04).

Une autre étude a été conduite chez des patients atteints de diabète.

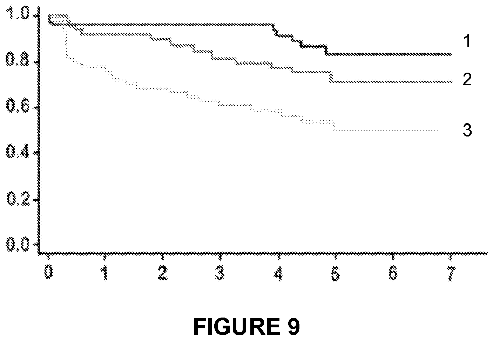

Sur une période de 1702 jours (4,6 ans) au cours de laquelle les patients ont été suivis, 46 patients ont subi un incident cardiaque majeur. Les valeurs d'entropie de la perfusion myocardique obtenues chez les patients ayant subi un accident cardiovasculaire majeur ont été comparées à celles observées chez les patients n'ayant pas subi d'accident cardiovasculaire majeur en utilisant un test t pour valeurs non appariées. Comme cela apparaît sur les figures 8 et 9, une différence statistiquement significative a été observée entre l'entropie des patients avec et sans accident cardiovasculaire majeur. A cet effet, les patients ont été classés par tertiles d'entropie : le premier tertile comprend le tiers de patients présentant l'entropie la plus basse, le deuxième tertile comprend les patients suivants, et le troisième tertile comprend le tiers de patients présentant l'entropie la plus élevée. Les premier, deuxième et troisième tertiles sont désignés respectivement par 1, 2 et 3 sur les figures 8 et 9.

La figure 8 présente des histogrammes illustrant le pourcentage de patients ayant subi un accident cardiaque majeur, selon le tertile auquel ils appartiennent, pour des patients présentant une ischémie du ventricule gauche inférieure à 10% (histogramme de gauche) et pour des patients présentant une ischémie du ventricule gauche supérieure ou égale à 10% (histogramme de droite).

La figure 9 présente le pourcentage de patients n'ayant pas subi d'accident cardiaque majeur au cours du temps (en années), selon chacun des trois tertiles.

Par ailleurs, l'entropie au stress semble plus fiable pour le pronostic que l'entropie au repos.

Interface graphique

Comme indiqué plus haut, les moyens de mise en œuvre du procédé décrit ci-dessus comprennent une interface graphique destinée à permettre aux biologistes et aux médecins d'exploiter de manière simple l'algorithme. Cette interface graphique peut utiliser des fonctionnalités en tout langage approprié, tel que MATLAB™ par exemple. Cette interface est destinée à être affichée sur un écran couplé au processeur permettant la mise en œuvre de l'algorithme décrit plus haut.

Cette interface permet la mise en œuvre d'un traitement automatique des images médicales de la perfusion myocardique en vue de déterminer l'entropie. Ainsi, dans le mode automatique, il suffit à un utilisateur de charger les images de l'individu et de lancer l'algorithme pour obtenir l'entropie de la carte topographique.

Cependant, de manière avantageuse, une correction manuelle pour chaque étape importante de l'algorithme est prévue. Dans le mode manuel, l'utilisateur a accès à tous les paramètres nécessaires à la réalisation de chaque étape, la valeur par défaut de ces paramètres pouvant être celle du mode automatique afin d'indiquer un ordre de grandeur à l'utilisateur. Il peut notamment modifier le processus de normalisation des valeurs d'activité des pixels, définir le type de segmentation (2D ou 3D) utilisé, et choisir la modalité selon laquelle les pixels ou voxels utilisés pour le calcul de l'entropie seront retenus.

Les fonctionnalités de cette interface peuvent comprendre notamment une ou plusieurs des fonctionnalités suivantes :

- charger des images médicales de la perfusion myocardique d'un individu à évaluer,
- choisir soit le mode automatique, soit le mode manuel,
- traiter les images,
- afficher les images coupe par coupe,
- afficher la carte topographique de projection,
- enregistrer la carte topographique et les paramètres utilisés pour l'algorithme,
- afficher l'entropie.

**REFERENCES**

[1] N.P. Johnson, K.L. Gould, Clinical Evaluation of a New Concept: Resting Myocardial Perfusion Heterogeneity Quantified by Markovian Analysis of PET Identifies Coronary Microvascular Dysfunction and Early Atherosclerosis in 1,034 Subjects, The Journal of Nuclear Medicine, Vol. 46, No. 9, Sept. 2005

[2] H. Soneson, JF Hubachs, M. Ugander, H. Arheden, E. Heiberg, An improved method for automatic segmentation of the left ventricle in myocardial perfusion SPECT, J. Nucl Med. 2009 Feb; 50(2): 205-13

[3] J. Poujol, M. Desvignes, A. Broisat, G. Barone-Rochette, G. Vanzetto, D. Fagret, L. Riou, C. Ghezzi, Myocardium Segmentation on 3D SPECT Images, ICIP 2015 : 4788-4792

[4] MURTA L O ET AL: "Segmental quantitative analysis of myocardial contrast echocardiography images using a bullseye représentation", COMPUTERS IN CARDIOLOGY, THESSALONIKI, GREECE, SEPT. 21 - 24, 2003; VOL. 30, pages 177-180

## Revendications

**1.** Procédé de détermination d'un indice d'hétérogénéité de la perfusion myocardique d'un individu à partir d'images médicales de la perfusion myocardique dudit individu, comprenant la construction, par segmentation bidimensionnelle desdites images, d'une carte topographique formée d'un ensemble de pixels myocardiques définis par une projection cylindrique du myocarde à partir du grand axe du ventricule gauche,

ledit procédé étant **caractérisé en ce qu'**il met en œuvre une segmentation bidimensionnelle des images pour construire la carte topographique constituée d'un ensemble de pixels, dans lequel ladite carte topographique comprend une pluralité de lignes où chaque ligne est une représentation d'une coupe du ventricule gauche effectuée perpendiculairement au grand axe du ventricule gauche, et où chaque ligne comprend une pluralité de pixels radiaux contenant une information de la perfusion du ventricule gauche dans la coupe correspondante, et **en ce qu'**il comprend la détermination de l'entropie de ladite carte topographique, et dans lequel la construction de la carte topographique de projection comprend :

- une estimation du volume du myocarde,
- la segmentation bidimensionnelle du ventricule gauche,
- la détermination du centre du myocarde sur chaque coupe du ventricule gauche,
- l'alignement des centres déterminés pour chaque coupe.

**2.** Procédé selon la revendication 1, dans lequel l'entropie de la carte topographique de projection est donnée par la formule suivante :

$$-\sum_{k=0}^{M-1} p_k \log_2(p_k)$$

où M est le nombre de valeurs d'intensité et $p_k$ est la probabilité associée à une intensité de pixel k.

**3.** Procédé selon la revendication 1, dans lequel la segmentation du ventricule gauche est réalisée à partir de coupes perpendiculaires au grand axe du ventricule gauche.

**4.** Procédé selon l'une des revendications 1 à 3, dans lequel la carte topographique et l'entropie sont déterminées pour l'ensemble du myocarde.

**5.** Procédé selon l'une des revendications 1 à 3, dans lequel la carte topographique et l'entropie sont déterminées pour une région du myocarde.

**6.** Procédé selon la revendication 5, comprenant la détermination d'une entropie globale à partir d'une pluralité d'entropies régionales.

**7.** Procédé selon l'une des revendications 1 à 6, dans lequel lesdites images médicales sont des images scintigraphiques.

**8.** Procédé selon la revendication 7, dans lequel lesdites images médicales sont obtenues par tomographie par émission monophotonique (SPECT).

**9.** Procédé selon la revendication 7, dans lequel lesdites images médicales sont obtenues par tomographie par émission de positons (TEP).

**10.** Procédé selon l'une des revendications 1 à 9, dans lequel lesdites images médicales sont obtenues sur un sujet au repos.

**11.** Procédé selon l'une des revendications 1 à 9, dans lequel lesdites images médicales sont obtenues sur un sujet exerçant un effort.

**12.** Procédé selon l'une des revendications 1 à 11, dans lequel lesdites images médicales sont obtenues sur un sujet en position de procubitus et/ou de decubitus.

**13.** Procédé selon l'une des revendications 1 à 12, dans lequel lesdites images médicales sont obtenues dans un mode adapté pour déterminer la variation de l'entropie au cours du temps.

**14.** Système de détermination d'un indice d'hétérogénéité de la perfusion myocardique d'un individu à partir d'images médicales de la perfusion myocardique dudit individu, **caractérisé en ce qu'**il comprend :

- un processeur configuré pour mettre en œuvre le procédé selon l'une des revendications 1 à 13 à partir desdites images ;
- un écran couplé au processeur et configuré pour afficher l'entropie déterminée.

**15.** Système selon la revendication 14, comprenant en outre une interface utilisateur adaptée pour être affichée sur l'écran et présentant au moins une des fonctionnalités suivantes :

> - charger des images médicales de la perfusion myocardique d'un individu à évaluer,
> - lancer une segmentation du ventricule gauche à partir desdites images,
> - afficher les images coupe par coupe,
> - afficher la carte topographique de projection,
> - enregistrer la carte topographique et les paramètres utilisés pour la construction de ladite carte,
> - afficher l'entropie de la carte de projection topographique.

**16.** Station d'acquisition d'images médicales comprenant un système selon l'une des revendications 14 ou 15.

**17.** Produit programme d'ordinateur comportant un ensemble d'instructions qui, une fois chargées sur un ordinateur, permettent la mise en œuvre du procédé selon l'une des revendications 1 à 13.

**Patentansprüche**

**1.** Verfahren zum Bestimmen eines Index der myokardialen Perfusionsheterogenität eines Individuums aus medizinischen Bildern der myokardialen Perfusion des Individuums, umfassend das Konstruieren, durch zweidimensionale Segmentierung der Bilder, einer topographischen Karte, die aus einem Satz von myokardialen Pixeln gebildet ist, die durch eine zylindrische Projektion des Myokards von der Hauptachse des linken Ventrikels definiert sind wobei das Verfahren **dadurch gekennzeichnet ist, dass** es eine zweidimensionale Segmentierung der Bilder implementiert, um die topographische Karte zu konstruieren, die aus einem Satz von Pixeln besteht, wobei die topographische Karte eine Vielzahl von Linien umfasst, wobei jede Linie eine Darstellung einer Scheibe des linken Ventrikels ist, die senkrecht zu der Längsachse des linken Ventrikels gemacht ist, und wobei jede Linie eine Vielzahl von radialen Pixeln umfasst, die Informationen über die Perfusion des linken Ventrikels in der entsprechenden Scheibe enthalten, und dass es die Bestimmung der Entropie der topographischen Karte umfasst, und wobei die Konstruktion der topographischen Projektionskarte umfasst:

> - eine Schätzung des Volumens des Myokards,
> - eine zweidimensionale Segmentierung des linken Ventrikels
> - Bestimmung des Zentrums des Myokards auf jeder Schicht des linken Ventrikels

> - Ausrichten der für jede Schicht ermittelten Zentren.

**2.** Verfahren nach einem der Ansprüche 1, wobei die topographische Projektionskarte durch die folgende Formel gegeben ist:

$$-\sum_{k=0}^{M-1} p_k \log_2(p_k)$$

wobei M die Anzahl der Intensitätswerte und $p_k$ die Wahrscheinlichkeit ist, die mit der Intensität eines Pixels k verbunden ist.

**3.** Verfahren nach Anspruch 1, wobei die Segmentierung des linken Ventrikels aus Schnitten senkrecht zur Längsachse des linken Ventrikels durchgeführt wird.

**4.** Verfahren nach einem der Ansprüche 1 bis 3, wobei die topographische Karte und die Entropie für das gesamte Myokard bestimmt werden.

**5.** Verfahren nach einem der Ansprüche 1 bis 3, wobei die topografische Karte und die Entropie für einen Bereich des Myokards bestimmt werden.

**6.** Verfahren nach Anspruch 5, umfassend das Bestimmen einer Gesamtentropie aus einer Vielzahl von regionalen Entropien.

**7.** Verfahren nach einem der Ansprüche 1 bis 6, wobei die medizinischen Bilder szintigraphische Bilder sind.

**8.** Verfahren nach Anspruch 7, wobei die medizinischen Bilder durch Einzelphotonen-Emissions-Computertomographie (SPECT) erhalten werden.

**9.** Verfahren nach Anspruch 7, wobei die medizinischen Bilder durch Positronen-Emissions-Tomographie (PET) gewonnen werden.

**10.** Verfahren nach einem der Ansprüche 1 bis 9, wobei die medizinischen Bilder an einer Person in Ruhe gewonnen werden.

**11.** Verfahren nach einem der Ansprüche 1 bis 9, wobei die medizinischen Bilder an einem Subjekt, das Stress ausübt, erhalten werden.

**12.** Verfahren nach einem der Ansprüche 1 bis 11, wobei die medizinischen Bilder an einer Person in einer Prokubitus- und/oder Dekubitus-Position gewonnen werden.

**13.** Verfahren nach einem der Ansprüche 1 bis 12, wobei die medizinischen Bilder in einem Modus erhalten werden, der geeignet ist, die Änderung der Entropie über die Zeit zu bestimmen.

**14.** System zur Bestimmung eines Index der myokardialen Perfusionsheterogenität eines Individuums aus medizinischen Bildern der myokardialen Perfusion des Individuums, **dadurch gekennzeichnet, dass** es umfasst

- einen Prozessor, der konfiguriert ist, um das Verfahren nach einem der Ansprüche 1 bis 13 aus den Bildern zu implementieren;
- einen Bildschirm, der mit dem Prozessor gekoppelt und konfiguriert ist, um die ermittelte Entropie anzuzeigen.

**15.** System nach Anspruch 14, ferner umfassend eine Benutzeroberfläche, die zur Anzeige auf dem Bildschirm eingerichtet ist und mindestens eine der folgenden Funktionalitäten aufweist

- Laden von medizinischen Bildern der myokardialen Perfusion von einer zu beurteilenden Person,
- Initiieren einer Segmentierung des linken Ventrikels aus den Bildern
- Anzeigen der Bilder Schicht für Schicht,
- Anzeigen der topographischen Projektionskarte,
- Speichern der topographischen Karte und der für die Konstruktion der Karte verwendeten Parameter
- Anzeige der Entropie der topographischen Projektionskarte.

**16.** Medizinische Bilderfassungsstation mit einem System nach einem der Ansprüche 14 oder 15.

**17.** Computerprogrammprodukt, umfassend einen Satz von Anweisungen, die, wenn sie auf einen Computer geladen werden, die Durchführung des Verfahrens einem der Ansprüche 1 bis 13 ermöglichen.

**Claims**

**1.** A method of determining an index of myocardial perfusion heterogeneity of an individual from medical images of myocardial perfusion of said individual, comprising constructing, by two-dimensional segmentation of said images, a topographic map formed of a set of myocardial pixels defined by a cylindrical projection of the myocardium from the major axis of the left ventricle said method being **characterized in that** it implements a two-dimensional segmentation of the images to construct the topographic map consisting of a set of pixels, wherein said topographic map comprises a plurality of lines where each line is a representation of a slice of the left ventricle made perpendicular to the long axis of the left ventricle, and where each line comprises a plurality of radial pixels containing information of the perfusion of the left ventricle in the corresponding slice, and **in that** it comprises the determination of the entropy of said topographic map, and wherein the construction of the topographic projection map comprises:

- an estimation of the volume of the myocardium,
- two-dimensional segmentation of the left ventricle
- determining the center of the myocardium on each slice of the left ventricle
- alignment of the centers determined for each slice.

**2.** The method according to any of claims 1, wherein the topographic projection map is given by the following formula:

$$-\sum_{k=0}^{M-1} p_k \log_2(p_k)$$

where M is the number of intensity values and $p_k$ is the probability associated with a pixel k intensity.

**3.** The method of claim 1, wherein the segmentation of the left ventricle is performed from sections perpendicular to the long axis of the left ventricle.

**4.** The method of any of claims 1 to 3, wherein the topographic map and entropy are determined for the entire myocardium.

**5.** The method of any of claims 1 to 3, wherein the topographic map and entropy are determined for a region of the myocardium.

**6.** The method of claim 5, comprising determining an overall entropy from a plurality of regional entropies.

**7.** The method of any of claims 1 to 6, wherein said medical images are scintigraphic images.

**8.** The method of claim 7, wherein said medical images are obtained by single photon emission computed tomography (SPECT).

**9.** The method of claim 7, wherein said medical images are obtained by positron emission tomography (PET).

10. The method of any one of claims 1 to 9 wherein said medical images are obtained on a subject at rest.

11. The method of any of claims 1-9, wherein said medical images are obtained on a subject exerting stress.

12. The method of any of claims 1 to 11, wherein said medical images are obtained on a subject in a procubitus and/or decubitus position.

13. The method of any of claims 1 to 12, wherein said medical images are obtained in a mode adapted to determine the change in entropy over time.

14. A system for determining an index of myocardial perfusion heterogeneity of an individual from medical images of myocardial perfusion of said individual, **characterized in that** it comprises:

> - a processor configured to implement the method according to one of claims 1 to 13 from said images;
> - a screen coupled to the processor and configured to display the determined entropy.

15. The system of claim 14, further comprising a user interface adapted to be displayed on the screen and having at least one of the following functionalities:

> - loading medical images of myocardial perfusion from an individual to be assessed,
> - initiating a segmentation of the left ventricle from said images
> - display the images slice by slice,
> - display the topographic projection map,
> - save the topographic map and the parameters used for the construction of said map,
> - display the entropy of the topographic projection map.

16. A medical image acquisition station comprising a system according to any of claims 14 or 15.

17. A computer program product comprising a set of instructions which, when loaded on a computer, enable the implementation of the method according to any of claims 1 to 13.

**FIGURE 1**

**FIGURE 2**

**FIGURE 3**

FIGURE 4

A

B

FIGURE 5

**FIGURE 6**

**FIGURE 7**

**FIGURE 8**

**FIGURE 9**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **N.P. JOHNSON ; K.L. GOULD.** Clinical Evaluation of a New Concept: Resting Myocardial Perfusion Heterogeneity Quantified by Markovian Analysis of PET Identifies Coronary Microvascular Dysfunction and Early Atherosclerosis in 1,034 Subjects. *The Journal of Nuclear Medicine,* Septembre 2005, vol. 46 (9
- **H. SONESON ; JF HUBACHS ; M. UGANDER ; H. ARHEDEN ; E. HEIBERG.** An improved method for automatic segmentation of the left ventricle in myocardial perfusion SPECT. *J. Nucl Med.,* Février 2009, vol. 50 (2), 205-13

- **J. POUJOL ; M. DESVIGNES ; A. BROISAT ; G. BARONE-ROCHETTE ; G. VANZETTO ; D. FAGRET ; L. RIOU ; C. GHEZZI.** Myocardium Segmentation on 3D SPECT Images. *ICIP,* 2015, 4788-4792
- **MURTA L O et al.** Segmental quantitative analysis of myocardial contrast echocardiography images using a bullseye représentation. *COMPUTERS IN CARDIOLOGY,* 21 Septembre 2003, vol. 30, 177-180